(19) Europäisches Patentamt
European Patent Office
Office européen des brevets

(11) Veröffentlichungsnummer: **0 368 213 A2**

(12) **EUROPÄISCHE PATENTANMELDUNG**

(21) Anmeldenummer: **89120521.3**

(22) Anmeldetag: **06.11.89**

(51) Int. Cl.5: **C09B 69/02, //C09B67/54, C09B31/072**

(30) Priorität: **10.11.88 DE 3838092**

(43) Veröffentlichungstag der Anmeldung: **16.05.90 Patentblatt 90/20**

(84) Benannte Vertragsstaaten: **CH DE FR GB IT LI**

(71) Anmelder: **BASF Aktiengesellschaft**
**Carl-Bosch-Strasse 38**
**D-6700 Ludwigshafen(DE)**

(72) Erfinder: **Bermes, Rudolf, Dr.**
**Pilgerstrasse 29**
**D-6700 Ludwigshafen(DE)**

(54) **Lithiumsalze sowie spezielle Aminsalze von 1-(4-Phenylazophenylazo)-2-hydroxynaphtalin-6,8-disulfonsäure.**

(57) Disazofarbstoff der Formel

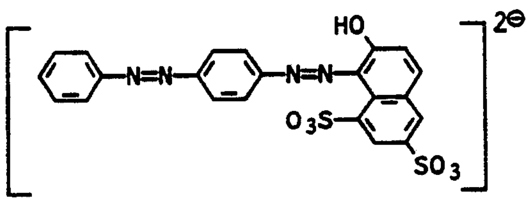

2 Kat⊕

in der Kat⊕ ein Lithiumion oder ein Ammoniumion der Formel

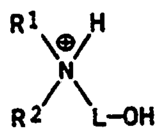

bedeutet, worin $R^1$ und $R^2$ unabhängig voneinander für Methyl, Ethyl oder durch Hydroxy substituiertes $C_2$-$C_3$-Alkyl und L für $C_2$-$C_3$-Alkylen stehen, sowie flüssige Farbstoffpräparationen, enthaltend Wasser und diesen Disazofarbstoff.

EP 0 368 213 A2

**Lithiumsalze sowie spezielle Aminsalze von 1-(4-Phenylazophenylazo)-2-hydroxynaphtalin-6,8-disulfonsäure**

Die vorliegende Erfindung betrifft den Disazofarbstoff der Formel I

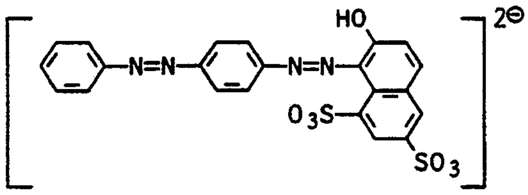 2 $Kat^{\oplus}$ (I),

in der $Kat^{\oplus}$ ein Lithiumion oder ein Ammoniumion der Formel

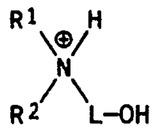

bedeutet, worin $R^1$ und $R^2$ gleich oder verschieden sind und unabhängig voneinander jeweils für Methyl, Ethyl oder durch Hydroxy substituiertes $C_2$-$C_3$-Alkyl und L für $C_2$-$C_3$-Alkylen stehen, sowie flüssige Farbstoffpräparationen, enthaltend Wasser und den neuen Disazofarbstoff.

Der oben genannte Farbstoff ist in Form seines Natriumsalzes als C.I. Acid Red 73 bekannt und im Colour Index unter der Nr. 27 290 beschrieben.

Aus der DE-A 2 142 939 sowie der FR-A 2 008 161 sind außerdem einige Aminsalze von 1-(4-Phenylazophenylazo)-2-hydroxynaphthalin-6,8-disulfonsäure bekannt.

Es hat sich jedoch gezeigt, daß die bisher bekannten Salze unbefriedigende anwendungstechnische Eigenschaften aufweisen. Insbesondere ist ihre Löslichkeit zu gering, was der Anwendung in Flüssigpräparationen im Wege steht.

Aufgabe der vorliegenden Erfindung war es deshalb, neue Salze von C.I. Acid Red 73 bereitzustellen, die die oben genannten Mängel nicht mehr aufweisen.

Demgemäß wurde der eingangs beschriebe Disazofarbstoff der Formel I gefunden.

$R^1$ und $R^2$ in Formel I sind z.B. Methyl, Ethyl, 2-Hydroxyethyl, 2-Hydroxypropyl oder 3-Hydroxypropyl.

L in Formel I ist z.B. Ethylen, 1,2-Propylen oder 1,3-Propylen.

Die Herstellung des Disazofarbstoffs der Formel I erfolgt nach an sich bekannten Methoden. Beispielsweise kann man 4-Aminoazobenzol der Formel II

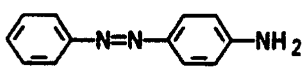 (II)

diazotieren und das resultierende Diazoniumsalz mit 2-Hydroxynaphthalin-6,8-disulfonsäure (G-Säure) kuppeln.

Mittels des aus der EP-B 53 220 bekannten Verfahrens kann dann das aus der oben beschriebenen Umsetzung resultierende wäßrige Reaktionsgemisch mit einem nicht emulgierend wirkenden, wasserunlöslichen Amin, das 12 bis 40 Kohlenstoffatome aufweist, behandelt werden, wobei man je Moläquivalent Hydroxysulfonylgruppen im Farbstoff ungefähr ein Moläquivalent Amin verwendet. Durch Zugabe von Säure wird dabei ein pH-Wert, der unterhalb von 5 liegt, eingestellt und das lipophile Aminsalz des Farbstoffs, das sich von der wäßrigen Phase abscheidet, abgetrennt.

Die organische Phase wird dann, gegebenenfalls nach Waschen mit Wasser, mit einer basischen Lithiumverbindung, z.B. Lithiumhydroxid oder Lithiumcarbonat, oder mit einem Amin der Formel III

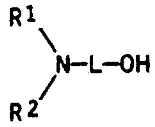

(III),

in der $R^1$, $R^2$ und L jeweils die obengenannte Bedeutung besitzen, und Wasser versetzt, worauf sich zwei Phasen ausbilden. Die organische Phase besteht im wesentlichen aus dem eingangs eingesetzten wasserunlöslichen Amin, während die wäßrige Phase den Disazofarbstoff der Formel I in gelöster Form enthält.

Der neue Azofarbstoff der Formel I, der eine hervorragende Wasserlöslichkeit aufweist, eignet sich in vorteilhafter Weise zum Färben von Papier.

Die wäßrige Phase kann direkt als Flüssigpräparation verwendet werden. Zur Erhöhung der Lagerstabilität ist es von Vorteil, noch wassermischbare Lösungsmittel, z.B. Isobutanol, Glykole oder veretherte Glykole, wie Ethylenglykol, 1,2-Propylenglykol, 1,2-Butylenglykol, 1,2-Isobutylenglykol, Diethylenglykol, Triethylenglykol, Polyethylenglykole, Dipropylenglykol, Ethylenglykolmonomethyl-, -ethyl-, -propyl- oder -butylether, 1,2-Propylenglykolmonomethyl-, -ethyl-, -propyl- oder -butylether, Diethylenglykolmonomethyl-, -ethyl, -propyl- oder butylether, Dipropylenglykolmonomethyl-, -ethyl-, -propyl- oder -butylether oder deren Mischungen, zuzusetzen.

Eine solche wäßrige Farbstoffpräparation enthält in der Regel 15 bis 40 Gew.% Disazofarbstoff der Formel I und 5 bis 15 Gew.% eines wassermischbaren Lösungsmittels, jeweils bezogen auf das Gesamtgewicht. Die wassermischbaren Lösungsmittel können dabei entweder am Ende oder auch bereits zusammen mit dem Amin der Formel III oder den basischen Lithiumverbindungen zugesetzt werden.

Die folgenden Beispiele sollen die Erfindung näher erläutern.

Beispiel 1

99 g p-Aminoazobenzol wurden in 700 ml Wasser gegeben und mit 140 g 30 gew.%iger Salzsäure versetzt. Durch Zugabe von 675 g Eis wurde das Gemisch auf eine Temperatur von ± 0 °C abgekühlt und unter Rühren mit 175 g einer 3,3-N wäßrigen Natriumnitritlösung versetzt.

Unabhängig davon wurden in einem anderen Gefäß 152 g 2-Hydroxynaphthalin-6,8-disulfonsäure in 800 ml Wasser gelöst und mit 161 g Soda versetzt. Danach wurde das Gemisch durch Zugabe von 650 g Eis auf eine Temperatur von 2 bis 6 °C abgekühlt. Zu diesem Gemisch ließ man unter kräftigem Rühren das Diazoniumsalzgemisch einlaufen. Nach kurzem Rühren wurde mittels 30 gew.%iger Salzsäure auf einen pH-Wert von 0,1 bis 0,3 angesäuert.

Die resultierende Farbstoffsuspension wurde dann auf eine Temperatur von 40 bis 50 °C erwärmt und mit 262 g Di(2-ethylhexyl)amin versetzt. Anschließend wurde unter Rühren auf eine Temperatur von 95 °C erwärmt, wobei sich zwei Phasen ausbildeten. Die untere Phase, die den Farbstoff in Form seines Aminsalzes enthielt wurde abgetrennt und mehrmals mit Wasser gewaschen. Danach wurde sie mit 600 ml Wasser, 45 g Lithiumcarbonat und 75 g Dipropylenglykol versetzt und auf eine Temperatur von 95 °C erwärmt, wobei sich wiederum zwei Phasen ausbildeten. Die untere Phase, die den Farbstoff in Form seines Lithiumsalzes enthielt, wurde abgetrennt und klärfiltriert. Diese Phase stellt die wäßrige Farbstoffpräparation dar.

In analoger Weise erhält man Aminsalze mit den folgenden Aminen.

| Beispiel Nr. | Amin |
|---|---|
| 2 | $N(C_2H_4OH)_3$ |
| 3 | $N(CH_2-CH-OH)_3$<br>$CH_3$ |
| 4 | $N(C_3H_6OH)_3$ |
| 5 | $(CH_3)_2NC_2H_4OH$ |
| 6 | $(C_2H_5)_2NC_2H_4OH$ |
| 7 | $(CH_3)_2NCH_2-CH-OH$<br>$CH_3$ |
| 8 | $(C_2H_5)_2NCH_2-CH-OH$<br>$CH_3$ |
| 9 | $(CH_3)_2NC_3H_6OH$ |
| 10 | $(C_2H_5)_2NC_3H_6OH$ |

**Ansprüche**

1. Disazofarbstoff der Formel I

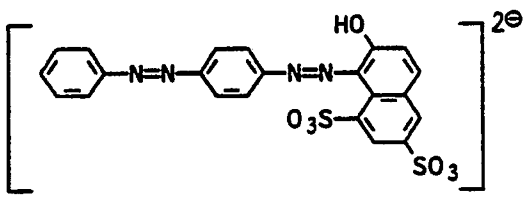 2 Kat⊕ (I),

in der Kat⊕ ein Lithiumion oder ein Ammoniumion der Formel

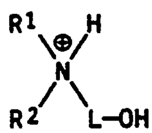

bedeutet, worin $R^1$ und $R^2$ gleich oder verschieden sind und unabhängig voneinander jeweils für Methyl, Ethyl oder durch Hydroxy substituiertes $C_2$-$C_3$-Alkyl und L für $C_2$-$C_3$-Alkylen stehen.

2. Flüssige Farbstoffpräparationen, enthaltend Wasser und den Disazofarbstoff gemäß Anspruch 1.